# EUROPÄISCHE PATENTSCHRIFT

(11) **EP 4 182 205 B1**
(45) Veröffentlichungstag und Bekanntmachung des Hinweises auf die Patenterteilung: **24.12.2025**
(21) Anmeldenummer: 21752759.7
(22) Anmeldetag: 16.07.2021
(51) Int. Cl.: B62D 27/02, B62D 29/00

(54) **VERFAHREN ZUM HERSTELLEN EINER KAROSSERIEKOMPONENTE EINER FAHRZEUGKAROSSERIE EINES FAHRZEUGS SOWIE KAROSSERIEKOMPONENTE UND FAHRZEUGKAROSSERIE**
METHOD FOR MANUFACTURING A VEHICLE BODY COMPONENT, VEHICLE BODY COMPONENT AND VEHICLE BODY
PROCÉDÉ DE FABRICATION D'UN ÉLÉMENT DE CARROSSERIE DE VÉHICULE, ÉLÉMENT DE CARROSSERIE DE VÉHICULE ET CARROSSERIE DE VÉHICULE.

(30) Priorität: 17.07.2020 DE 102020118934
(43) Veröffentlichungstag der Anmeldung: 24.05.2023
(73) Patentinhaber: 3M Innovative Properties Company, Saint Paul, Minnesota 55133-3427 (US)
(72) Erfinder: CURA, Elisabeth, 41453 Neuss (DE); YAVUZ, Nurettin, 41453 Neuss (DE); HERMSDORF, Robert, 41453 Neuss (DE)
(74) Vertreter: Mathys & Squire
(86) Internationale Anmeldenummer: PCT/IB2021/056456
(87) Internationale Veröffentlichungsnummer: WO 2022/013837

(56) Entgegenhaltungen:
- WO-A1-2020/023863
- WO-A1-96/00675
- DE-A1- 102014 010 664
- US-A1- 2012 279 647

## Beschreibung

Die vorliegende Erfindung betrifft ein Verfahren zum Herstellen einer Karosseriekomponente einer Fahrzeugkarosserie eines Fahrzeugs sowie eine Karosseriekomponente mit einem Strukturbauteil und einem damit verklebten weiteren Bauteil und außerdem eine Fahrzeugkarosserie mit der Karosseriekomponente.

Insbesondere Aluminiumbauteile als Strukturbauteile von Karosseriekomponenten haben den Nachteil, dass sie nach ihrer Herstellung nur eine gewisse Haltedauer an der sauerstoffreichen Atmosphäre bzw. Umgebung gelagert werden können, bevor sie oxidieren. Die sich bei der Oxidation bildende Aluminiumoxidschicht sorgt für nachteilige Eigenschaften der Oberflächen des Strukturbauteils. Insbesondere verlieren die Oberflächen des Strukturbauteils an Haftfähigkeit. Ein Verkleben einer Bauteiloberfläche eines Aluminiumbauteils mit Aluminiumoxidschicht an einem weiteren Bauteil kann bei sicherheitskritischen Strukturbauteilen von Karosseriekomponenten nicht mehr hinreichend zuverlässig und sicher erfolgen.

Deshalb wird im Stand der Technik in der Herstellung von Karosseriekomponenten von Fahrzeugkarosserien, die aus einem Strukturbauteil und einem weiteren Bauteil bestehen, welche miteinander verklebt werden, das Strukturbauteil vor dem Verkleben mit dem weiteren Bauteil tauchlackiert, um die spezifischen Oberflächeneigenschaften des Strukturbauteils zu erhalten. Bei einem Aluminiumbauteil wird so eine Oxidation der Oberflächen vermieden und die guten Hafteigenschaften der Oberflächen des Aluminiumbauteils werden für eine spätere Klebeverbindung mit dem weiteren Bauteil erhalten. DE 10 2014 010664 A1 beschreibt ein Verfahren zur Herstellung eines Karosserieverbundteils.

Der Erhalt der Oberflächeneigenschaften durch Tauchlackieren des Strukturbauteils ist sehr wirksam, jedoch auch zeit- und kostenintensiv. Dabei erfolgt das Tauchlackieren der zusammengesetzten Fahrzeug(roh)karosserie, in der die Karosseriekomponente Verwendung findet, ohnehin spätestens bei dem Fahrzeughersteller. Dadurch wird das Strukturbauteil gleich zwei Mal tauchlackiert, nämlich einmal vor dem Verkleben mit dem weiteren Bauteil und einmal nach dem Zusammensetzen der Fahrzeug(roh)karosserie. Nicht nur ist dieser Prozess redundant und schon deshalb auch kostenintensiv, auch birgt er aufgrund der für das Tauchlackieren notwendigen chemikalischen Stoffe in dem oder den hierfür notwendigen Tauchbädern eine zusätzliche Belastung für die Umwelt.

Aufgrund der geringen Haltedauer bis zur Oxidation bei einem Strukturbauteil aus Aluminium kann die Tauchlackierung im Herstellungsprozess im Stand der Technik aber nicht entfallen, da ein Überschreiten der Haltedauer bis zum Verkleben des Strukturbauteils mit dem weiteren Bauteil nicht ohne Weiteres vermieden werden kann. Hinzu kommt, dass das Strukturbauteil meist von einem fahrzeugherstellerexternen Lieferanten gefertigt und an den Fahrzeughersteller zur Verklebung mit dem weiteren Bauteil bzw. zur Herstellung der Karosseriekomponente geliefert wird. Der Fahrzeughersteller setzt dann die Karosseriekomponente durch Verkleben zusammen. Erst danach setzt er die gesamte Fahrzeugkarosserie mit der Karosseriekomponente zusammen und führt die Tauchlackierung durch. Bis der Fahrzeughersteller das Strukturbauteil mit dem weiteren Bauteil verklebt, vergeht nicht zuletzt aufgrund des Transports von dem Lieferanten zu dem Fahrzeughersteller viel Zeit. Die Haltedauer des Strukturbauteils kann nicht eingehalten werden und das Strukturbauteil aus Aluminium würde ohne vorherige Tauchlackierung oxidieren und seine guten Hafteigenschaften einbüßen.

Es ist daher Aufgabe der vorliegenden Erfindung, die voranstehend beschriebenen Nachteile bei der Herstellung einer Karosseriekomponente aus einem Strukturbauteil und einem weiteren Bauteil zu vermindern, insbesondere ein Verfahren zum Herstellen einer Karosseriekomponente einer Fahrzeugkarosserie eines Fahrzeugs bereitzustellen, das auf kostengünstige und umweltschonende Art und Weise den Anforderungen der Fahrzeugkarosserie, wie Crashsicherheit, Karosseriesteifigkeit usw., genügt.

Die voranstehende Aufgabe wird gelöst durch ein Verfahren zum Herstellen einer Karosseriekomponente einer Fahrzeugkarosserie eines Fahrzeugs mit den Merkmalen des Anspruchs 1 sowie durch eine Karosseriekomponente mit den Merkmalen des Anspruchs 10 und durch eine Fahrzeugkarosserie mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Karosseriekomponente sowie der erfindungsgemäßen Fahrzeugkarosserie und jeweils umgekehrt, sodass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe gelöst durch ein Verfahren zum Herstellen einer Karosseriekomponente einer Fahrzeugkarosserie eines Fahrzeugs, wobei das Verfahren die Schritte aufweist:
(a) Bereitstellen eines mit Klebefilm versehenen Strukturbauteils der Karosseriekomponente, wobei der Klebefilm auf zumindest einer Klebefläche des Strukturbauteils aufgebracht ist,
(b) Bereitstellen eines weiteren Bauteils der Karosseriekomponente,
(c) Aufbringen eines Klebstoffs auf dem Klebefilm, und
(d) Verkleben des mit Klebefilm versehenen Strukturbauteils mit dem weiteren Bauteil mittels des auf dem Klebefilm aufgebrachten Klebstoffs, sodass die Karosseriekomponente als das mit dem weiteren Bauteil verklebte, mit Klebefilm versehene Strukturbauteil erhalten wird.

Damit wird durch das erfindungsgemäße Verfahren ein sicheres Verkleben des Strukturbauteils mit dem weiteren Bauteil zur Herstellung der Karosseriekomponenten erzielt, ohne dass das Strukturbauteil zuvor zusätzlich tauchlackiert werden müsste. Statt der Tauchlackierung wird der Klebefilm zum Bereitstellen guter Hafteigenschaften für die Verklebung mit dem weiteren Bauteil genutzt. Somit wird das weitere Bauteil nicht mehr mit der zumindest einen Klebefläche des Strukturbauteils selbst, sondern mit dem Klebefilm bzw. an einer Oberfläche des Klebefilms an der Position der zumindest einen Klebefläche mittels des Klebstoffs verklebt. Dies sorgt für eine Senkung der Kosten der Vorbereitung des Strukturbauteils zur Herstellung der Karosseriekomponente und damit insgesamt die Kosten der Herstellung der Fahrzeugkarosserie. Zudem verbessert es die Umweltbilanz der Herstellung der Karosseriekomponenten und somit der Fahrzeugkarosserie, da die Tauchlackierung einzig des Strukturbauteils entfallen kann.

Die zumindest eine Klebefläche kann zumindest zwei oder mehr Klebeflächen umfassen. Insbesondere kann das Strukturbauteil drei bis dreißig, ferner insbesondere fünf bis zwanzig Klebeflächen aufweisen. Typischerweise kann das Strukturbauteil um die zehn Klebeflächen aufweisen.

Der Klebstoff kann auf die gesamte Oberfläche des Klebefilms oder auf eine teilweise Oberfläche des Klebefilms für das Verkleben des Strukturbauteils mit dem weiteren Bauteil aufgebracht werden.

Das Bereitstellen des Strukturbauteils kann das Herstellen des Strukturbauteils umfassen. Ferner kann das Bereitstellen des weiteren Bauteils das Herstellen des weiteren Bauteils umfassen.

Das Strukturbauteil kann aus einem Metall bestehen bzw. metallisch sein. Ferner kann das weitere Bauteil aus einem Metall bestehen bzw. metallisch sein. Das weitere Bauteil kann beispielsweise ein Stahlblech sein. Als Stahlblech ausgebildet kann es beispielsweise eine Verkleidung der Fahrzeugkarosserie bilden. Das weitere Bauteil kann aber auch beispielsweise ein Verbundstoff aus einem Kunststoff oder dergleichen sein.

Erfindungsgemäß ist es vorgesehen, dass das Strukturbauteil ein Aluminiumbauteil ist. Mit anderen Worten besteht das Strukturbauteil aus Aluminium bzw. einer Aluminiumlegierung oder weist zumindest Aluminium auf. Bei dem Aluminiumbauteil ist die Haltedauer gering, bis sich die Oberflächeneigenschaften verändern, insbesondere die Hafteigenschaften aufgrund von Oxidation reduzieren.

Dabei ist es erfindungsgemäß vorgesehen, dass zumindest eine gegenüber der Umgebung freiliegende Oberfläche des mit Klebefilm versehenen Strukturbauteils oxidiert, sodass sich an der zumindest einen freiliegenden Oberfläche eine Aluminiumoxidschicht bildet oder vergrößert. Die zumindest eine freiliegende Oberfläche ist diejenige Oberfläche des Strukturbauteils, auf der kein Klebefilm angeordnet ist bzw. die keine Klebefläche ist. Demgegenüber sind Klebeflächen nur diejenigen Flächen, die zur Verklebung mit dem weiteren Bauteil vorgesehen sind. Entsprechend kann es auch mehrere freiliegenden Oberflächen an dem Strukturbauteil geben. Die zumindest eine freiliegende Oberfläche oxidiert, da sie gegenüber der sauerstoffreichen Umgebung freiliegt. Da die zumindest eine freiliegende Oberfläche nicht zum Verkleben des Strukturbauteils mit dem weiteren Bauteil verwendet wird, kann damit bewusst darauf verzichtet werden, die freiliegende Oberfläche gegenüber Oxidation zu schützen, also etwa ebenfalls mit Klebefilm zu versehen oder, wie im Stand der Technik, zu lackieren. Damit werden die während der Haltedauer guten Hafteigenschaften des Strukturbauteils an der zumindest einen freiliegenden Oberfläche bewusst aufgegeben. Später kannn schließlich auch die zumindest eine freiliegende Oberfläche des Strukturbauteils zusammen mit der Fahrzeugkarosserie bzw. Fahrzeugrohkarosserie in einem Tauchbad lackiert werden.

Hierbei kann vorgesehen sein, dass das Strukturbauteil an der zumindest einen Klebefläche keine Aluminiumoxidschicht aufweist oder die Aluminiumoxidschicht an der zumindest einen freiliegenden Oberfläche des Strukturbauteils dicker als eine Aluminiumoxidschicht an der zumindest einen Klebefläche ist. Dies kann dadurch erreicht werden, dass die zumindest eine Klebefläche unmittelbar oder zeitnah (beispielsweise höchstens 3 Stunden, insbesondere höchstens 1 Stunden oder höchstens 30 Minuten) nach der Herstellung des Strukturbauteils oder seiner Lagerung in einer sauerstoffarmen oder sauerstofffreien Atmosphäre mit dem Klebefilm überklebt wird. Dadurch können sehr gute Hafteigenschaften des Klebefilms an der zumindest einen Klebefläche erzielt werden, da diese zum Zeitpunkt des Aufbringens des Klebefilms noch nicht oder nur geringfügig oxidiert ist.

Es kann vorgesehen sein, dass das Verfahren ferner zum Bereitstellen des mit Klebefilm versehenen Strukturbauteils die Schritte des Bereitstellens des Strukturbauteils und des Aufbringens des Klebefilms auf die zumindest eine Klebefläche des bereitgestellten Strukturbauteils, sodass das mit Klebefilm versehene Strukturbauteil erhalten wird, aufweist. Das Aufbringen des Klebefilms kann insbesondere maschinell und ferner insbesondere automatisiert, beispielsweise durch einen Roboter, erfolgen. Während die Verklebung des weiteren Bauteils mit dem Strukturbauteil beim Hersteller der Fahrzeugkarosserie bzw. beim Fahrzeughersteller des Fahrzeugs erfolgen kann, kann das Herstellen und/oder Aufbringen des Klebefilms bei einem Lieferanten erfolgen.

Dabei kann vorgesehen sein, dass der Klebefilm als Bandware bereitgestellt und auf die zumindest eine Klebefläche des Strukturbauteils aufgebracht wird. Das Aufbringen des Klebefilms kann insbesondere maschinell und ferner insbesondere automatisiert, beispielsweise durch einen Roboter, erfolgen. Entsprechend kann der Klebefilm als Bandware bereitgestellt passend auf die zumindest eine Klebefläche oder die mehreren Klebeflächen zugeschnitten werden. Die Bandware kann beispielsweise von einer Rolle abgerollt werden. Alternativ kann der Klebefilm in Form von zumindest einem Zuschnitt für die zumindest eine Klebefläche oder in Form von Zuschnitten für die jeweiligen Klebeflächen bereitgestellt werden.

Es kann außerdem vorgesehen sein, dass der Klebefilm nach dem Aufbringen auf der zumindest einen Klebefläche des Strukturbauteils thermisch ausgehärtet wird. Entsprechend handelt es sich bei dem Klebefilm dann um einen thermisch aushärtbaren Klebstoff. Das thermische Aushärten kann beispielsweise in einem Ofen oder induktiv erfolgen.

Zudem kann vorgesehen sein, dass der Klebstoff ein pastöser Klebstoff, insbesondere ein pastöser 1-Komponenten-Klebstoff, ist. Der Klebstoff kann ein von dem Klebefilm verschiedener Klebstoff sein bzw. eine andere chemische Zusammensetzung oder Basis aufweisen. Als Klebstoff kann entsprechend ein an sich bekannter Karosserieklebstoff gewählt werden.

Auch kann vorgesehen sein, dass die zumindest eine Klebefläche unlackiert ist. Insbesondere ist möglich, dass das Strukturbauteil als unlackiertes Strukturbauteil bereitgestellt wird bzw. vor dem Aufbringen des Klebefilms auf das Strukturbauteil unlackiert ist. Damit wird bewusst auf einen Schutz vor Oxidation der Oberflächen des Strukturbauteils verzichtet, um die damit verbundenen Nachteile wie erhöhte Kosten und Umweltbelastung zu vermeiden und nur auf den Klebefilm zu setzen.

Es ist dann möglich, dass das Strukturbauteil, insbesondere die Karosseriekomponente, erstmalig zusammen mit der Fahrzeugkarosserie tauchlackiert, insbesondere kathodisch tauchlackiert, wird. Da die Fahrzeugkarosserie bzw. Fahrzeugrohkarosserie dabei im Gesamten in ein oder mehrere Tauchbäder eingetaucht wird, wird zwangsläufig auch das Strukturbauteil an den freiliegenden Oberflächen lackiert. Die Klebeflächen hingegen bleiben mit dem Klebefilm verdeckt, auf den wiederum das weitere Bauteil geklebt ist. Die Klebeflächen werden somit nicht lackiert.

Auch ist möglich, dass zwischen dem Aufbringen des Klebefilms auf die zumindest eine Klebefläche des Strukturbauteils und dem Tauchlackieren der Karosseriekomponente eine Zeitspanne von zumindest 12 Stunden, insbesondere von zumindest 24 Stunden oder von zumindest 48 Stunden, liegt. Dadurch wird die Zeitspanne dazwischen zum Transport nutzbar. Der Klebefilm kann damit bei dem Lieferanten auf den Klebeflächen aufgebracht werden, während das Tauchlackieren erst nach dem Transport und der Herstellung der Fahrzeugkarosserie bei dem Fahrzeughersteller erfolgt.

Auch kann vorgesehen sein, dass das Strukturbauteil als Strangpressprofil oder Gussbauteil bereitgestellt wird. Das Strukturbauteil kann dann hohen Kräften widerstehen bzw. sich bei entsprechender Krafteinwirkung, etwa bei einem Crash, nur wenig verformen.

Im Übrigen kann vorgesehen sein, dass der Klebefilm Epoxidharz umfasst. Insbesondere kann der Klebefilm überwiegend Epoxidharz umfassen oder mit anderen Worten kann der Klebefilm auf Epoxidbasis sein.

Weiterhin kann vorgesehen sein, dass der Klebefilm zwei Klebeschichten und eine zwischen den beiden Klebeschichten angeordnete Trägerschicht aufweist. Ein solcher Klebefilm kann auch als Strukturklebstofffilm bezeichnet werden. Die Klebeschichten können für die Klebewirkung sorgen. Die Trägerschicht kann die Klebeschichten zusammenhalten und den Klebefilm versteifen. Die Trägerschicht kann eine Netzstruktur aufweisen. Die Trägerschicht mit Netzstruktur kann beispielsweise aus einem Gewebe bestehen. Allgemein kann der Klebefilm an den Klebeschichten mit einer Folie abgedeckt sein, die ein ungewolltes Verkleben vermeidet. Erst nach dem Abziehen der Folie läuft dann eine Offenzeit des Klebers an bzw. kann der Klebefilm dann auf das Strukturbauteil geklebt werden.

Gemäß einem zweiten Aspekt der Erfindung wird die Aufgabe gelöst durch eine Karosseriekomponente einer Fahrzeugkarosserie eines Fahrzeugs, wobei die Karosseriekomponente ein Strukturbauteil der Fahrzeugkarosserie und ein weiteres Bauteil der Fahrzeugkarosserie aufweist, wobei zwischen dem Strukturbauteil und dem weiteren Bauteil ein Klebefilm angeordnet ist, und wobei auf dem Klebefilm ein Klebstoff angeordnet ist, der das Strukturbauteil und das weitere Bauteil zusammenhält.

Damit weist die Karosseriekomponente gemäß dem zweiten Aspekt der Erfindung dieselben Vorteile auf, wie sie in Bezug auf das Verfahren gemäß dem ersten Aspekt der Erfindung ausführlich beschrieben worden sind.

Dabei kann vorgesehen sein, dass die Karosseriekomponente nach dem Verfahren gemäß dem ersten Aspekt der Erfindung hergestellt ist.

Ferner kann vorgesehen sein, dass das Strukturbauteil ein Aluminiumbauteil ist, der Klebefilm auf zumindest einer Klebefläche des Strukturbauteils der Klebefilm angeordnet ist und auf zumindest einer freiliegenden Oberfläche des Strukturbauteils kein Klebefilm angeordnet ist, wobei das Strukturbauteil an der zumindest einen freiliegenden Oberfläche eine Aluminiumoxidschicht aufweist und (a) das Strukturbauteil an der zumindest einen Klebefläche keine Aluminiumoxidschicht aufweist oder (b) an der zumindest einen Klebefläche eine Aluminiumoxidschicht aufweist, die an der freiliegenden Oberfläche befindliche Aluminiumoxidschicht jedoch dicker als die Aluminiumoxidschicht an der zumindest einen Klebefläche ist.

Gemäß einem dritten Aspekt der Erfindung wird die Aufgabe gelöst durch eine Fahrzeugkarosserie eines Fahrzeugs mit zumindest einer Karosseriekomponente gemäß dem zweiten Aspekt der Erfindung.

Ein erfindungsgemäßes Verfahren zum Herstellen einer Karosseriekomponente einer Fahrzeugkarosserie, eine erfindungsgemäße Karosseriekomponente sowie eine erfindungsgemäße Fahrzeugkarosserie werden nachfolgend anhand von Zeichnungen beispielhaft und schematisch näher erläutert. Es zeigen jeweils:
- Figur 1: in einer schematischen Darstellung eine Schnittansicht einer Karosseriekomponente gemäß einem Ausführungsbeispiel der Erfindung,
- Figur 2: in einer schematischen Darstellung eine weitere Schnittansicht der Karosseriekomponente aus Figur 1,
- Figur 3: in einer Seitenansicht ein Fahrzeug mit einer Fahrzeugkarosserie gemäß einem Ausführungsbeispiel der Erfindung, und
- Figur 4: in einer schematischen Darstellung den Ablauf von Verfahrensschritten in einem Verfahren zum Herstellen der Karosseriekomponente aus Figur 1 und 2 gemäß einem Ausführungsbeispiel der Erfindung.

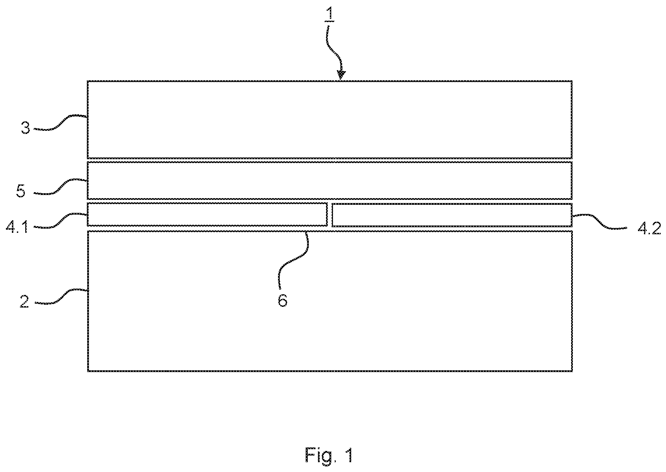

Elemente mit gleicher Funktion und Wirkungsweise sind in den Figuren 1 bis 4 jeweils mit denselben Bezugszeichen versehen.

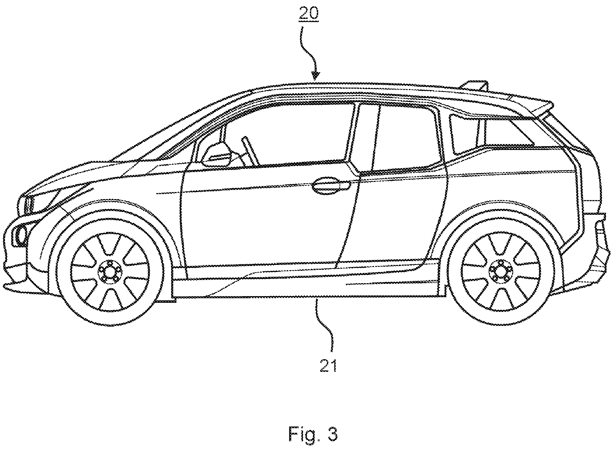

Figur 1 zeigt schematisch einen Schnitt durch eine Karosseriekomponente 1 für eine Fahrzeugkarosserie 21 eines Fahrzeugs 20 (siehe Figur 3). Die Karosseriekomponente 1 kann im sichtbaren Bereich der Fahrzeugkarosserie 21 oder im nicht sichtbaren Bereich der Fahrzeugkarosserie 21 angeordnet sein.

Die Querschnittsansicht aus Figur 1 veranschaulicht die Bauteile der Karosseriekomponente 1 und eine exemplarische Anordnung. Die Karosseriekomponente 1 verfügt über ein Strukturbauteil 2. Das Strukturbauteil 2 ist vorliegend ein Aluminiumbauteil. Das Strukturbauteil 2 ist ein verwindungssteifes Bauteil, das in der Karosseriekomponente 1 für eine hohe Steifigkeit sorgt, um in der Fahrzeugkarosserie 21 sicherheitstechnischen Crashanforderungen zu entsprechen.

Ferner verfügt die Karosseriekomponente 1 über ein weiteres Bauteil 3. Das weitere Bauteil 3 ist mit dem Strukturbauteil 2 durch eine Klebung verbunden, wie sie im Folgenden näher erläutert wird. Die Klebung muss ebenfalls den sicherheitstechnischen Crashanforderungen der Fahrzeugkarosserie 21 entsprechen, also gewissen Mindestbelastungen standhalten und sich dabei nicht lösen. Das weitere Bauteil 3 kann ebenfalls ein Strukturbauteil 2 sein, beispielsweise aus Aluminium, oder aber ein einfacheres Bauteil, wie ein Blech, beispielsweise ein Stahlblech, insbesondere ein Verkleidungsblech der Fahrzeugkarosserie 21, sein.

Die Klebung ist derart gestaltet ausgebildet, dass ein Klebefilm 4.1, 4.2 auf Epoxid-Basis auf verschiedene Klebeflächen 6 des Strukturbauteils 2 aufgebracht ist, vorliegend beispielsweise zehn Klebeflächen 6, wobei nur die eine Klebefläche 6 bezeichnet ist. Der Klebefilm 4.1, 4.2 ist in dem vorliegenden Ausführungsbeispiel beispielhaft in zwei Teilen bzw. Klebefilmstreifen, die von einer Bandware abgerollt worden sind, gezeigt. Der Klebefilm 4 kann aber auch nur ein Klebefilmteil bzw. -streifen oder mehr als zwei Teile sein. Insbesondere kann je ein Teil des Klebefilms 4 auf je eine Klebefläche 6 aufgebracht sein. Zwischen den Teilen des Klebefilms 4.1, 4.2 besteht ein fertigungsbedingter Toleranzabstand. Diese Teile des Klebefilms 4.1, 4.2 sind thermisch ausgehärtet.

Der Klebefilm 4 ist unmittelbar oder zeitnah nach der Herstellung des Strukturbauteils 2 auf die Klebeflächen 6 aufgebracht worden, sodass das Aluminium des Strukturbauteils 2 an den Klebeflächen 6 nicht oder nur geringfügig oxidieren konnte. Dadurch konnte eine gute Haftwirkung zwischen dem Klebefilm 4.1, 4.2 und dem Strukturbauteil 2 erzielt werden.

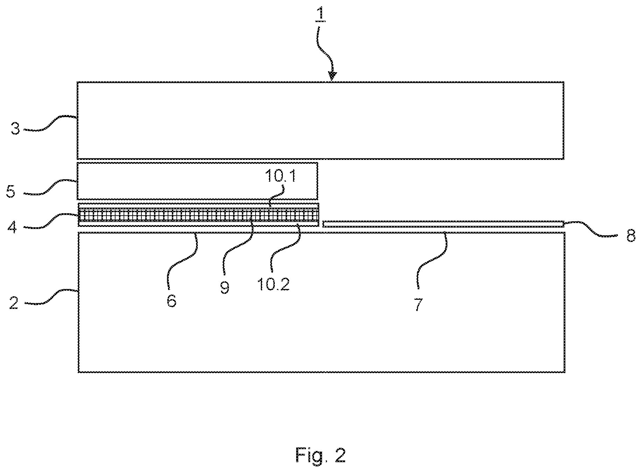

Hätte sich eine Aluminiumoxidschicht 8 (siehe Figur 2) an den Klebeflächen 6 gebildet oder wäre die Aluminiumoxidschicht 8 relativ dick, wäre die Adhäsion des Klebefilms 4.1, 4.2 darauf schlecht bzw. könnte das weitere Bauteil 3 nicht mittels des Klebstoffes 5 daran derart befestigt werden, dass die sicherheitsrelevanten Crashanforderungen erfüllt werden könnten.

Der Klebefilm 4.1, 4.2 hingegen haftet gut an dem Strukturbauteil 2 und hält weiterhin gute Hafteigenschaften zum Verkleben des Strukturbauteils 2 mit dem weiteren Bauteil 3 an der Oberfläche des Klebefilms 4.1, 4.2 bereit. Dadurch wurde das Strukturbauteil 2 mittels des Klebefilms 4.1, 4.2 und des darauf angeordneten Klebstoffs 5, vorliegend einem 1-Komponenten-Klebstoff, mit dem weiteren Bauteil 3 verklebt. Die so hergestellte Karosseriekomponente 1, die ihrerseits mit weiteren Karosseriekomponenten 1 der Fahrzeugkarosserie 21 zusammengesetzt bzw. gefügt werden kann, erfüllt damit die notwendigen Crashanforderungen hinsichtlich der Fügeverbindung zwischen dem Strukturbauteil 2 und dem weiteren Bauteil 3.

Anders als im Stand der Technik muss das Strukturbauteil 2 nicht separat vor dem Fügen mit dem weiteren Bauteil 3 tauchlackiert werden. Auch kann das Strukturbauteil 2 von einem Lieferanten bezogen und erst bei dem Karosseriehersteller bzw. Fahrzeughersteller mit dem weiteren Bauteil 3 gefügt werden, da das Aluminium des Strukturbauteils 2 nicht an den Klebeflächen 6 oxidieren kann. Stattdessen wird die Oberfläche des Klebefilms 4 zum Verkleben mit dem weiteren Bauteil 3 mittels des Klebstoffs 5 genutzt. Ferner kann das Strukturbauteil 2 dann später zusammen mit der gesamten Fahrzeugkarosserie 21 in einem kathodischen Tauchbad tauchlackiert werden.

Figur 2 zeigt eine alternative Querschnittsansicht der Karosseriekomponente 1 aus Figur 1. Figur 2 zeigt, dass neben den Klebeflächen 6 auch an der Umgebung freiliegende Oberflächen 7 an dem Strukturbauteil 2 vorhanden sind. Diese freiliegenden Oberflächen 7 werden nicht mit Klebefilm 4 versehen und werden auch nicht tauchlackiert. Die freiliegenden Oberflächen 7 oxidieren daher auf dem Weg von dem Lieferanten zu dem Fahrzeughersteller, wodurch sich an den freiliegenden Oberflächen 7 eine Aluminiumoxidschicht 8 bildet. Dies ist jedoch nicht nachteilig für die Haftung des Strukturbauteils 2 an dem weiteren Bauteil 3, da das Strukturbauteil 2 nur an den Flächen des Klebefilms 4, die die Klebeflächen 6 überdecken, mit dem weiteren Bauteil 3 verklebt werden. Dort sind die Hafteigenschaften aufgrund des Klebefilms 4 besser als an der Aluminiumoxidschicht 8 auf den freiliegenden Oberflächen 7.

Figur 2 zeigt ferner den Aufbau des Klebefilms 4. Der Klebefilm 4 weist eine netzartige Trägerschicht 9 mit darunter und darüber befindlicher Klebeschicht 10.1, 10.2 auf. Diese Struktur des Klebefilms 4 sorgt für eine gute Haftung an dem Strukturbauteil 2 wie auch eine gute Haftung für den Klebstoff 5.

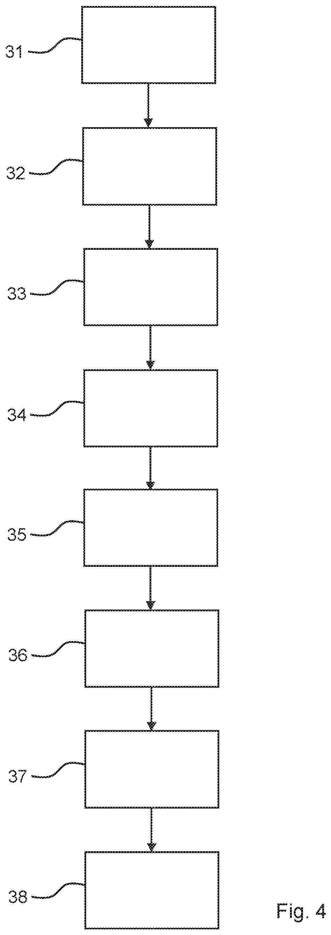

Figur 4 zeigt schematisch einen Ablauf der Verfahrensschritte in einem Verfahren zur Herstellung der Karosseriekomponente 1 aus den Figuren 1 und 2, wie sie in der Fahrzeugkarosserie 21 der Figur 3 Verwendung findet.

In einem ersten Verfahrensschritt 31 wird das Strukturbauteil 2 hergestellt. Diese Herstellung des Strukturbauteils 2 kann bei einem Lieferanten des Herstellers der Fahrzeugkarosserie 21 bzw. des Fahrzeugherstellers des Fahrzeugs 20 erfolgen. Beispielsweise kann eine Herstellung des Strukturbauteils 2 als Strangpressprofil aus Aluminium durch Strangpressen erfolgen. Alternativ kann eine Herstellung des Strukturbauteils 2 als Gussbauteil durch Gießen erfolgen.

In dem zweiten Verfahrensschritt 32 wird der Klebefilm 4, der als Bandware bereitgestellt wird, auf den Klebeflächen 6 des Strukturbauteils 2 aufgebracht. Dies erfolgt unmittelbar nach der Herstellung des Strukturbauteils 2 oder kurz danach, damit sich keine oder allenfalls eine möglichst kleine Aluminiumoxidschicht 8 auf den Klebeflächen 6 ausbildet. Dadurch kann eine gute Haftung des Klebefilms 4 auf den Klebeflächen 6 gewährleistet werden. Entsprechend erfolgt dieser zweite Verfahrensschritt 32 bevorzugt ebenfalls schon beim Lieferanten.

In dem dritten Verfahrensschritt 33 wird der Klebefilm 4 thermisch ausgehärtet. Dies kann beispielsweise in einem Ofen erfolgen, in den das mit Klebefilm 4 versehene Strukturbauteil 2 eingeführt wird. Alternativ kann dies durch induktives und lokales Erhitzen an den Klebeflächen 6 erfolgen.

In dem vierten Verfahrensschritt 34 wird das Strukturbauteil 2 mit dem thermisch ausgehärteten Klebefilm 4 zum Hersteller der Fahrzeugkarosserie 21 bzw. des Fahrzeugherstellers des Fahrzeugs 20 transportiert und bei ihm bereitgestellt. Hier kann eine große Zeitspanne vergehen. Dabei kann die freiliegende Oberfläche 7 an dem Strukturbauteil 2 oxidieren. Da die Klebeflächen 6 an dem Strukturbauteil 2 allerdings mit dem ausgehärteten Klebefilm 4 versehen sind, hat das Strukturbauteil 2 weiterhin eine gute Haftwirkung, nämlich an dem ausgehärteten Klebefilm 4 auf den Klebeflächen 6.

In dem fünften Verfahrensschritt 35 wird das weitere Bauteil 3 der Karosseriekomponente 1 beim Hersteller der Fahrzeugkarosserie 21 bzw. des Fahrzeugherstellers des Fahrzeugs 20 bereitgestellt, das seinerseits von einem anderen Lieferanten stammen kann.

In dem sechsten Verfahrensschritt 36 wird das Strukturbauteil 2 an dem Klebefilm 4 mittels des Klebstoffs 5 mit dem weiteren Bauteil 3 verklebt. So wird die Karosseriekomponente 1 als das mit dem weiteren Bauteil 3 verklebte, mit Klebefilm 4 versehene Strukturbauteil 2 erhalten.

In dem siebten Verfahrensschritt 37 wird die Karosseriekomponente 1 aus Strukturbauteil 2 und weiterem Bauteil 3 schließlich mit weiteren Komponenten zur Fahrzeugkarosserie 21 gefügt.

In dem achten Verfahrensschritt 38 erfolgt schließlich ein kathodisches Tauchlackieren der Fahrzeugkarosserie 21 mit der Karosseriekomponente 1 in einem oder mehreren Tauchbädern. Dabei wird die sich zwischenzeitlich an den freiliegenden Oberflächen 7 gebildete Aluminiumoxidschicht 8 mitlackiert. Dies stellt die erste Lackierung der freiliegenden Oberflächen 7 des Strukturbauteils 2 dar.

### Bezugszeichenliste

- 1: Karosseriekomponente
- 2: Strukturbauteil
- 3: weiteres Bauteil
- 4: Klebefilm
- 5: Klebstoff
- 6: Klebefläche
- 7: freiliegende Oberfläche
- 8: Aluminiumoxidschicht
- 9: Trägerschicht
- 10: Klebeschicht
- 20: Fahrzeug
- 21: Fahrzeugkarosserie
- 31...38: Verfahrensschritte

## Patentansprüche

1. Verfahren zum Herstellen einer Karosseriekomponente (1) einer Fahrzeugkarosserie (21) eines Fahrzeugs (20), wobei das Verfahren die Schritte aufweist:
(a) Bereitstellen eines mit Klebefilm (4) versehenen Strukturbauteils (2) der Karosseriekomponente (1), wobei der Klebefilm (4) auf zumindest einer Klebefläche (6) des Strukturbauteils (2) aufgebracht ist,
(b) Bereitstellen eines weiteren Bauteils (3) der Karosseriekomponente (1),
(c) Aufbringen eines Klebstoffs (5) auf dem Klebefilm (4), und
(d) Verkleben des mit Klebefilm (4) versehenen Strukturbauteils (2) mit dem weiteren Bauteil (3) mittels des auf dem Klebefilm (4) aufgebrachten Klebstoffs (5), sodass die Karosseriekomponente (1) als das mit dem weiteren Bauteil (3) verklebte, mit Klebefilm (4) versehene Strukturbauteil (2) erhalten wird;
wobei das Strukturbauteil (2) ein Aluminiumbauteil ist; und wobei zumindest eine gegenüber der Umgebung freiliegende Oberfläche (7) des mit Klebefilm (4) versehenen Strukturbauteils (2) oxidiert, sodass sich an der zumindest einen freiliegenden Oberfläche (7) eine Aluminiumoxidschicht (8) bildet oder vergrößert.

2. Verfahren nach einem der voranstehenden Ansprüche, wobei das Verfahren ferner zum Bereitstellen des mit Klebefilm (4) versehenen Strukturbauteils (2) ferner die Schritte des Bereitstellens des Strukturbauteils (2) und des Aufbringens des Klebefilms (4) auf die zumindest eine Klebefläche (6) des bereitgestellten Strukturbauteils (2), sodass das mit Klebefilm (4) versehenes Strukturbauteil (2) erhalten wird, aufweist.

3. Verfahren nach Anspruch 2, wobei der Klebefilm (4) nach dem Aufbringen auf der zumindest einen Klebefläche (6) des Strukturbauteils (2) thermisch ausgehärtet wird.

4. Verfahren nach Anspruch 2 oder 3, wobei der Klebefilm (4) als Bandware bereitgestellt und auf die zumindest eine Klebefläche (6) des Strukturbauteils (2) aufgebracht wird.

5. Verfahren nach einem der voranstehenden Ansprüche, wobei der Klebstoff ein pastöser Klebstoff, insbesondere ein pastöser 1-Komponenten-Klebstoff, ist.

6. Verfahren nach einem der voranstehenden Ansprüche, wobei die zumindest eine Klebefläche (6) unlackiert ist.

7. Verfahren nach einem der voranstehenden Ansprüche, wobei das Strukturbauteil (2) als Strangpressprofil oder Gussbauteil bereitgestellt wird.

8. Verfahren nach einem der voranstehenden Ansprüche, wobei der Klebefilm (4) Epoxidharz umfasst.

9. Verfahren nach einem der voranstehenden Ansprüche, wobei der Klebefilm (4) zwei Klebeschichten (10.1, 10.2) und eine zwischen den beiden Klebe schichten (10.1, 10.2) angeordnete Trägerschicht (9) aufweist.

10. Karosseriekomponente (1) einer Fahrzeugkarosserie (21) eines Fahrzeugs (20), wobei die Karosseriekomponente (1) ein Strukturbauteil (2) der Fahrzeugkarosserie (21) und ein weiteres Bauteil (3) der Fahrzeugkarosserie (21) aufweist, wobei zwischen dem Strukturbauteil (2) und dem weiteren Bauteil (3) ein Klebefilm (4) angeordnet ist, wobei auf dem Klebefilm (4) ein Klebstoff (5) angeordnet ist, der das Strukturbauteil (2) und das weitere Bauteil (3) zusammenhält,
wobei das Strukturbauteil (2) ein Aluminiumbauteil ist, der Klebefilm (4) auf zumindest einer Klebefläche (6) des Strukturbauteils (2) angeordnet ist und auf zumindest einer freiliegenden Oberfläche (7) des Strukturbauteils (2) kein Klebefilm (4) angeordnet ist,
wobei das Strukturbauteil (2) an der zumindest einen freiliegenden Oberfläche (7) eine Aluminiumoxidschicht (8) aufweist und
(a) das Strukturbauteil (2) an der zumindest einen Klebefläche (6) keine Aluminiumoxidschicht (8) aufweist oder
(b) an der zumindest einen Klebefläche (6) eine Aluminiumoxidschicht (8) aufweist, die an der freiliegenden Oberfläche (7) befindliche Aluminiumoxidschicht (8) jedoch dicker als die Aluminiumoxidschicht (8) an der zumindest einen Klebefläche (6) ist.

11. Karosseriekomponente (1) nach Anspruch 10, wobei die Karosseriekomponente (1) nach einem Verfahren der Ansprüche 1 bis 9 hergestellt ist.

12. Fahrzeugkarosserie (21) eines Fahrzeugs (20) mit zumindest einer Karosseriekomponente (1) nach Anspruch 10 oder 11.

## Claims

1. Method for producing a body component (1) of a vehicle body (21) of a vehicle (20), wherein the method comprises the steps of:
(a) providing a structural part (2) of the body component (1) provided with adhesive film (4), wherein the adhesive film (4) is applied to at least one adhesive surface (6) of the structural part (2),
(b) providing a further part (3) of the body component (1),
(c) applying an adhesive (5) to the adhesive film (4), and
(d) bonding the structural part (2) provided with adhesive film (4) to the further part (3) by means of the adhesive (5) applied to the adhesive film (4), so that the body component (1) is obtained as the structural part (2) bonded to the further part (3) and provided with adhesive film (4);
wherein the structural part (2) is an aluminum part; and wherein at least one surface (7) of the structural part (2) provided with adhesive film (4) that is exposed to the environment oxidizes, so that an aluminum oxide layer (8) forms or enlarges on the at least one exposed surface (7).

2. Method according to one of the preceding claims, wherein the method further for providing the structural part (2) provided with adhesive film (4) further comprises the steps of providing the structural part (2) and applying the adhesive film (4) to the at least one adhesive surface (6) of the provided structural part (2), so that the structural part (2) provided with adhesive film (4) is obtained.

3. Method according to claim 2, wherein the adhesive film (4) is thermally cured after application to the at least one adhesive surface (6) of the structural part (2).

4. Method according to claim 2 or 3, wherein the adhesive film (4) is provided as a tape and is applied to the at least one adhesive surface (6) of the structural part (2).

5. Method according to any of the preceding claims, wherein the adhesive is a pasty adhesive, in particular a pasty 1-component adhesive.

6. Method according to any of the preceding claims, wherein the at least one adhesive surface (6) is unpainted.

7. Method according to any of the preceding claims, wherein the structural part (2) is provided as an extruded profile or cast part.

8. Method according to any of the preceding claims, wherein the adhesive film (4) comprises epoxy resin.

9. Method according to any of the preceding claims, wherein the adhesive film (4) comprises two adhesive layers (10.1, 10.2) and a carrier layer (9) arranged between the two adhesive layers (10.1, 10.2).

10. Body component (1) of a vehicle body (21) of a vehicle (20), wherein the body component (1) comprises a structural part (2) of the vehicle body (21) and a further part (3) of the vehicle body (21), wherein an adhesive film (4) is arranged between the structural part (2) and the further part (3), wherein an adhesive (5) is arranged on the adhesive film (4) and holds the structural part (2) and the further part (3) together,
wherein the structural part (2) is an aluminum part, the adhesive film (4) is arranged on at least one adhesive surface (6) of the structural part (2) and no adhesive film (4) is arranged on at least one exposed surface (7) of the structural part (2),
wherein the structural part (2) has an aluminum oxide layer (8) on the at least one exposed surface (7) and
(a) the structural part (2) does not have an aluminum oxide layer (8) on the at least one adhesive surface (6) or
(b) has an aluminum oxide layer (8) on the at least one adhesive surface (6), but the aluminum oxide layer (8) located on the exposed surface (7) is thicker than the aluminum oxide layer (8) on the at least one adhesive surface (6).

11. Body component (1) according to claim 10, wherein the body component (1) is produced according to a method of claims 1 to 9.

12. Vehicle body (21) of a vehicle (20) having at least one body component (1) according to claim 10 or 11.

## Revendications

1. Procédé permettant la fabrication d'un composant de carrosserie (1) d'une carrosserie de véhicule (21) d'un véhicule (20), dans lequel le procédé présente les étapes consistant à :
(a) fournir un élément structurel (2) du composant de carrosserie (1), lequel élément structurel est pourvu d'un film adhésif (4), dans lequel le film adhésif (4) est appliqué sur au moins une surface adhésive (6) de l'élément structurel (2),
(b) fournir un élément (3) supplémentaire du composant de carrosserie (1),
(c) appliquer un adhésif (5) sur le film adhésif (4), et
(d) coller l'élément structurel (2) pourvu du film adhésif (4) à l'élément (3) supplémentaire à l'aide de l'adhésif (5) appliqué sur le film adhésif (4), de sorte que le composant de carrosserie (1) est obtenu sous la forme de l'élément structurel (2) pourvu du film adhésif (4) collé à l'élément (3) supplémentaire ;
dans lequel l'élément structurel (2) est un élément en aluminium ; et dans lequel au moins une surface (7) de l'élément structurel (2) pourvu du film adhésif (4), laquelle surface est exposée à l'environnement, s'oxyde de sorte qu'une couche d'oxyde d'aluminium (8) se forme ou s'agrandit sur l'au moins une surface (7) exposée.

2. Procédé selon l'une des revendications précédentes, dans lequel le procédé présente en outre, pour la fourniture de l'élément structurel (2) pourvu d'un film adhésif (4), les étapes consistant à fournir l'élément structurel (2) et à appliquer le film adhésif (4) sur l'au moins une surface adhésive (6) de l'élément structurel (2) fourni, de manière à obtenir l'élément structurel (2) pourvu du film adhésif (4).

3. Procédé selon la revendication 2, dans lequel le film adhésif (4) est durci thermiquement après avoir été appliqué sur l'au moins une surface adhésive (6) de l'élément structurel (2).

4. Procédé selon la revendication 2 ou 3, dans lequel le film adhésif (4) est fourni sous forme de matériau en bande et est appliqué sur l'au moins une surface adhésive (6) de l'élément structurel (2).

5. Procédé selon l'une des revendications précédentes, dans lequel l'adhésif est un adhésif pâteux, en particulier un adhésif pâteux à un composant.

6. Procédé selon l'une des revendications précédentes, dans lequel l'au moins une surface adhésive (6) n'est pas vernie.

7. Procédé selon l'une des revendications précédentes, dans lequel l'élément structurel (2) est fourni sous la forme d'un profilé extrudé ou d'un élément moulé.

8. Procédé selon l'une des revendications précédentes, dans lequel le film adhésif (4) comprend une résine époxy.

9. Procédé selon l'une des revendications précédentes, dans lequel le film adhésif (4) présente deux couches adhésives (10.1, 10.2) et une couche de support (9) agencée entre les deux couches adhésives (10.1, 10.2).

10. Composant de carrosserie (1) d'une carrosserie de véhicule (21) d'un véhicule (20), dans lequel le composant de carrosserie (1) présente un élément structurel (2) de la carrosserie de véhicule (21) et un élément (3) supplémentaire de la carrosserie de véhicule (21), dans lequel un film adhésif (4) est agencé entre l'élément structurel (2) et l'élément (3) supplémentaire, dans lequel un adhésif (5) est agencé sur le film adhésif (4), lequel adhésif maintient ensemble l'élément structurel (2) et l'élément (3) supplémentaire,
dans lequel l'élément structurel (2) est un élément en aluminium, le film adhésif (4) est agencé sur au moins une surface adhésive (6) de l'élément structurel (2) et aucun film adhésif (4) n'est agencé sur au moins une surface (7) exposée de l'élément structurel (2),
dans lequel l'élément structurel (2) présente une couche d'oxyde d'aluminium (8) sur l'au moins une surface (7) exposée et
(a) l'élément structurel (2) ne présente pas de couche d'oxyde d'aluminium (8) sur l'au moins une surface adhésive (6) ou
(b) présente une couche d'oxyde d'aluminium (8) sur l'au moins une surface adhésive (6), mais la couche d'oxyde d'aluminium (8) se trouvant sur la surface (7) exposée est plus épaisse que la couche d'oxyde d'aluminium (8) sur l'au moins une surface adhésive (6).

11. Composant de carrosserie (1) selon la revendication 10, dans lequel le composant de carrosserie (1) est fabriqué selon un procédé des revendications 1 à 9.

12. Carrosserie de véhicule (21) d'un véhicule (20), comportant au moins un composant de carrosserie (1) selon la revendication 10 ou 11.
